# EUROPEAN PATENT APPLICATION

(11) **EP 4 802 880 A2**
(43) Date of publication of application: **09.09.2026**
(21) Application number: 26185258.6
(22) Date of filing: 13.03.2017
(51) Int. Cl.: A01G 9/14

(54) **STRUCTURES**

(30) Priority: 11.03.2016 GB 201604198; 08.07.2016 GB 201611949
(62) Document number(s) of the earlier application(s) in accordance with Art. 76 EPC: 17721203.2 / 3 426 016
(71) Applicant: Evolve Growing Solutions Limited, Nottingham, Nottinghamshire NG7 3EN (GB)
(72) Inventor: LEE, Phillip, Nottinghamshire, NG7 3EN (GB)
(74) Representative: Avidity IP

(57) **Abstract**

ETFE film is dimensionally stable so by use of methods and machines which utilise that stability, structures can be made by initial slight tension for retention upon a skeletal frame typical of a greenhouse a convenient manner of achieving such structures is provided despite the flaccid nature of such ETFE film. A consistent film overlap can be forced into spaced channels with a profile element to provide an initial lateral tension to retain the film in a frame. By use of heat shrinkage the tension can be equalised and/or enhanced with heat shrinkage upon cooling after local heating of the film.

## Description

This invention relates generally to structures and more particularly methods of covering such structures and the structures themselves which generally comprise a skeletal type frame with a skin or film covering and particularly such structures used as greenhouses and grow spaces for horticulture.

It is known to provide greenhouses and similar structures with traditionally glass panels or similar in a frame structure. More recently so-called poly-tunnels have been used comprising a frame normally of spaced arches with a polymer plastic (polyurethane - PU) sheeting to act a skin or film over the frame. The structures act to protect in terms of wind, environmental shocks and temperature modulation. The structures also provide some protection with regard to pests such as birds which may damage or eat produce. The covering must allow UV light to access the growing area.

With regard to structures with a frame and surface skin or film there are significant issues with regard to fabrication. For large structures there is still a tendency to use rigid glass and similar material panels locked into a suitable frame. Flexible sheeting can be difficult to work with over large unsupported areas and can be susceptible to damage by penetration and accident. Furthermore, traditional plastics materials used as skin or film over a frame tend to have too great a variation in terms of elasticity with use and age so that stretching of the traditional plastic material such as polyurethane can lead to ballooning and lack of tension in the covering and so growing conditions. FR2528275 (Monfray) illustrates a conventional film which is secured with a crimp over a V profile.

ETFE is a plastics material used for a number of applications and particularly as a tough coating or laminate to improve the performance of frangible components. Such ETFE can be supplied in various thicknesses and widths. ETFE is substantially stable once installed under tension and that tension is retained despite aging over time, thermal cycling over days and Seasons and ETFEE has good transient properties to UV along with thermal insulation capabilities. The tension in the skeletal frame with an over sheet of ETFE helps to achieve structural integrity for the combination of frame and over film. However, it is necessary to provide a means to allow assembly of the ETFE in rolled sheet form to the frame and also achieve the desired level of tension, neither too much or too little to achieve the necessary structural integrity whilst still have the necessary performance level in terms of UV and environmental protection. A consideration of the relatively higher cost of ETFE compared to existing plastic coverings and traditional fixed glass or similar panels are also needed for commercial viability.

ETFE (Ethylene Tetrafluoroethylene) is a very mechanically and photo chemically very resistant material that has the advantage of being almost completely transparent (92% transparency) to the solar spectrum allowing plants to grow in totally natural conditions. Furthermore, its light weight and flexibility allows the use with any customized architectural solutions.

The difficulty is that although ETFE is available in accurately manufactured roll widths and thicknesses and relatively long lengths but it is still quite flaccid so handling in windy conditions and of course at elevated heights can cause problems. The lower cost of plastics such as PU offset the higher cost of installation compared to glass panels for like for like installations. The installation of EFTE sheets as greenhouse covers is currently done by human operators, with the evident constrain on deployment speed and standard health and safety issues. Swift and easy initial retention of the ETFE film sheets to the framing would be advantageous followed simultaneously or very soon after by proportionate final tensioning would improve the acceptability of ETFE as a covering to a frame.

In accordance with first aspects of the present invention there is provided a method.of applying a film such as flexible ETFE to a skeletal structure, the method including presenting a film from a roll as a sheet across two spaced channels with a film edge overlap either side over a respective channel then forcing the overlap into a respective channel with the overlap sheet between opposed lip parts of the spaced channels, each film overlap forced simultaneously with a profile element located in to the channel such that the film overlap is distorted in the channel for retention by the respective profile element for forced lateral tension in the film sheet between the spaced channels, the forced tension and simultaneous location of the profile element achieved by a substantially perpendicular downward pressure above the profile element into each channel by a respective former rotatable in a direction of presentation of the film sheet to the spaced channels. In accordance with second aspects of the present invention there is provided a method of applying a film such as flexible ETFE to a skeletal structure, the method including presenting the film with an initial tension between spaced channels and retaining with a respective channel, locally heating the film as and/or immediately after retention of the film by each channel whereby the film extends between the spaced channels with an initial lateral tension and the local heating causes a desired stretch of the film retain in the channels as the initial lateral tension and that initial lateral tension is increased as the local heating is removed and the film between the channels cools. Also in accordance with aspects of the present invention there is provided a machine to provide the first and second aspects of the invention above separately or in combination. Aspects of the invention also include a structure with a film associated with the structure as described with regard to other aspects of the invention.

The profile element and the channel may be reciprocal male and female parts.

The local heating may be uniform across the film sheet. The local heating may be variable across the sheet. The local heating may be provided by IR or blown hot air.

The former may be a roller. The former may be substantially the width of the channel and configured in the direction of channel. The former may be configured to transiently squash the profile element for interference retention when removed from engagement with the profile element in the channel.

The skeletal frame may be for a greenhouse. The spaced channels may be for a roof panel.

The film may have a fixed width of 2.1 metres. The film on the roll may have a residual shrinkage capacity in service of up to 1.5%. The initial tension in the film across the spaced channels may be 0.05%.

The channels may form part of or be adjacent the guttering of the structure and that guttering used to guide the film roller along between the spaced channels. Ballast may be provided to facilitate the downward pressure forcing the profile element into the channel with interference retention of the profile element in the channel
In accordance with third aspects of the present invention there is provided a film fixing arrangement comprising a channel and a channel profile having a least a partially reciprocal shape to the cross-section of the channel when a sheet film is between them, the channel profile acting force the film into the channel whereby the film is bent about a edge of the channel and the film in tension pushes the profile against opposite parts of the channel whereby resilient shape of the profile inhibits release of the film captured in the channel.

The profile may be solid or hollow or at least have one void within it. The hollow or void may be filled to alter the resilient shape of the profile. The profile may have a smooth surface. The profile may have ribs and/or grooves and/or depressions and/or surface features such as pimples. The channel may have ribs and/or grooves and/or depressions and/or surface features such as pimples. The ribs and/or grooves and/or depressions and/or surface features such as pimples in the profile and the channel may interact with each other and vice versa.

The film may be ETFE film suitable for architectural structures and/or frames..

Embodiments of the invention will now be described by way of example only with reference to the accompanying drawings in which:
Figure 1 is a schematic illustration of a method and machine for applying a film in accordance with structures consistent with aspects of the present invention;
Figure 2 shows aspects of the present invention as depicted in figure 1 in greater detail;
Figure 3 shows aspects of the present invention as depicted in figure 1 and figure 2 in further detail;
Figure 4 shows aspects of the present invention as depicted in figures 1 to 3 in further detail;
Figure 5 provides in figure 5(a) a top view of aspects of the present invention and in figure 5(b) a frontal view of aspects of the present invention;
Figure 6 shows schematically further tensioning and film tensioning control in accordance with aspects of the present invention;
Figure 7 provides a schematic illustration of aspects of the present invention in terms of a machine to achieve the necessary method steps for parts of aspects of the present invention;
Figure 8 provides a process step sequence in accordance with combined aspects of the present invention; and,
Figure 9 provides a comparison of the decision steps to balance film tension optimisation with temperature optimisation regimes to avoid significant damage to the film during installation.

It will be understood that skeletal structures formed from extruded or other profiled sections of steel or aluminium or plastics materials can be made off-site and fabricated as a structure on site as required. The skeletal structure will have open roofs and sides but generally will be sufficiently robust to take the weight of installation operatives. Being an open structure wind and other environmental conditions will tend not to pose too great a problem at this stage. It is when the skeletal structure is covered that problems can occur and it is not uncommon for covering/installation of fixed or plastic panels to be delayed until wind speed and force is at acceptable levels for safety as well as to ensure that even a modicum of control to a desired tension can be achieved in the covering to the skeletal frame of the structure. Rapid and quick association of large areas of film cover to the skeletal frame with a desired level of tension for on-going structural integrity would be beneficial particularly if tensioning could be auto-stabilising in the structure.

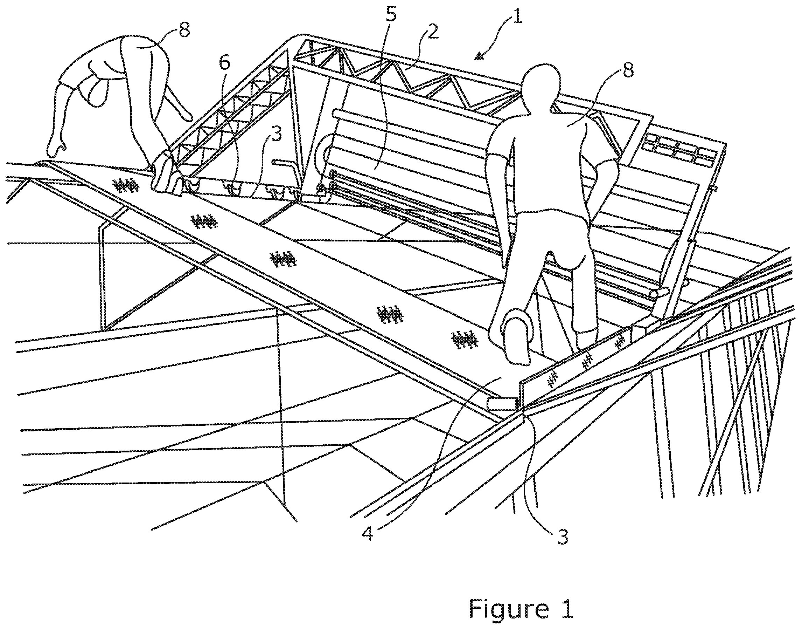

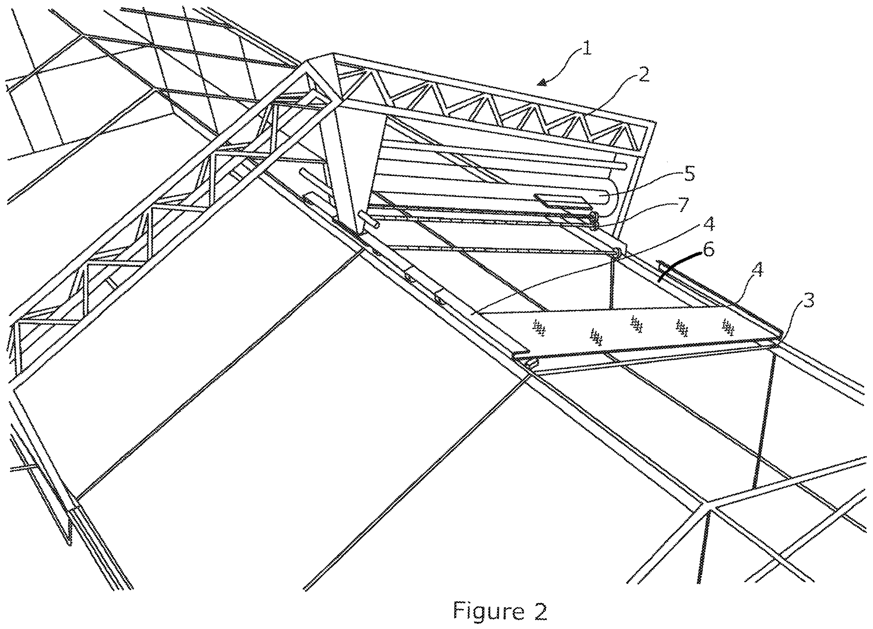

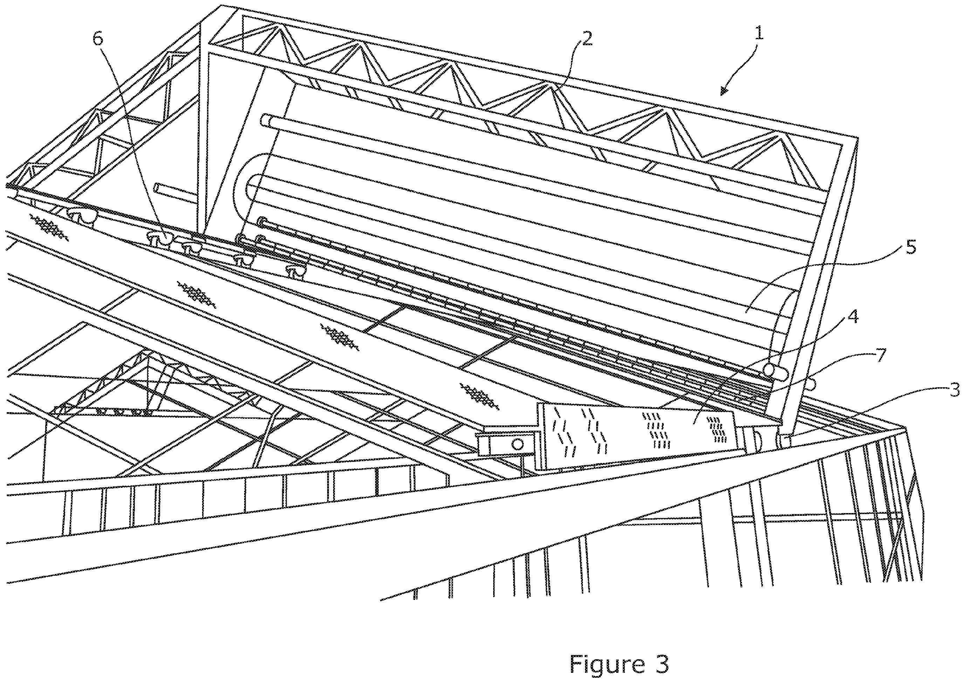

ETFE film as outline above would have some significant advances particular with respect to structures to be used for growing as in so-called Greenhouse structures. It will be understood that:-
1. A straight ETFE film 'roll to roof' method using an appropriate machine which takes the ETFE film straight from the roll under tension and to be presented close to the point of insertion into the skeletal building frame would have benefits. The ETFE will have width such that there is an overlap of the film beyond the frame and this overlap fixed by retaining click profile elements either side used to secure the film in place. As shown in figures 1-4 generally a film in accordance with aspects of the present invention will be presented as roll in a frame such that the film is appropriately presented with the side or edge portions of the film providing the overlap and almost simultaneously with 'laying of the film across channel sections of the frame a profile element is driven into the channel by a former roller with the overlap side portions of the ETFE film. The profile element will be held by interference within the channel. Thus, the ETFE film along its edges is retained by the profile by forcing or squashing the profile into each channel which distorts it and inhibits the profile from simple outward expulsion from the channel in use. It is by appropriate shaping of the profile and/or choice of profile material properties that an initial tensioning of the film over and across the skeletal frame is achieved. The film will itself be distorted sharply with the channel on one side and the profile on the other with a particular edge kink about the lip of each channel on the one side nearest the other spaced channel. Film tension is between these opposed lips of the spaced channels in the skeletal structure. The profile is driven or slid into the channel by a former such as roller so that the initial tensioning of the ETFE film is substantially mechanically determined by the downward pressure applied against the ETFE film by the former roller 'taking the film overlap with it' and the profile into the channel. Most importantly the length of unsecured film is limited to the section between the roller on the laying machine and the profile secured film in the channel. The film is robustly secured at one end by the profile in the channel each side and at the other end by the substantial mass of the laying frame and the remainder roll of film under a desired level of tension determined by resistance to release of the film roller on a 'braked' spindle. The weight or mass of the laying machine is also locally enhanced by installation operatives (workmen) either side of the machine both inhibiting lift of the machine and also ensuring the desired level of downward pressure exerted to force the profile into or along the channel to retain the film in use. As can be seen an installation operative is generally positioned over each channel using typically a gutter formed in the roof parts of the skeletal frame structure. The operatives will guide and ensure that the machine frame moves forward at the correct speed so that the profile is forced and clicked into place in the channel. This enables avoidance of significant issues of working with very lightweight films over substantial areas, enabling installation in wind, rain etc. with replicable high precision, at lower cost than hand labour and without health and safety risks related to work at elevated heights. It can be considered this as first fix for the film if other aspects of alternative parts of the present invention are utilised.
2. By making the max use of the material inherent properties of ETFE film, precisely manufactured rolls of up to 200m lengths, can be used almost continuously along a length of structure such as a roof. With a 2.10 m width - matching conventional Venlo Glasshouse dimensions typically a robust, easily integrated structural formation system can be provided which is considerably cheaper to install than conventional glazing covering and comparable to current glass construction methods achieving a tougher ETFE envelope that costs the same as best practice in glass.
3. The applicant has found that ETFE films that are available to them have a residual shrinkage capacity higher than the tensioning needs as a function of the manufacturing process. In such circumstances in accordance with further aspects of the present invention a heat shrink machine can be used that goes over the skeletal frame e.g. the roof once the film is secured in place, to heat shrink the film in situ. This removes the need for further mechanical tensioning procedures reduces the overall cost of the ETFE film envelope covering of the skeletal frame in accordance with aspects of the present invention. This system has the significant further benefit in that it enables the film to be re-tensioned in the future by re-application of heat through a re-run of the heat so shrinkage later. It will be understood that structures such as greenhouses tend not to have solid foundations so are often affected by subsidence etc. A temperature curve is required to achieve a total shrinkage range to extend to 1.5%. It will be understood that there will be minimum/maximum temps for achieving this shrinkage result before any significant negative impact on the film's ongoing performance. These maximum and minimum heating temperatures for the film will depend a number of factors including width and thickness of the film, the spacing of the channels within which the ETFE film is secured and other factors such as how rigid the skeletal structure is made - a rigid structure may not give/flex as much and of course the frame locally in contact with the ETFE film may have thermal conductivity issues which locally alter the material properties of the film in these areas. However, generally the heating process will be close to the initial retention of the film by channels and profile elements as described or by other techniques so that the film is stretched by heat either so that on cooling that small percentage of stretch is lost and tension enhanced or subsequently such that tensions are 'equalised' along the length of the fixed film to frame and/or the profile in the channel can further 'pull' the more stretchy film into the channel and retain that pull for enhanced or more controlled/desired tension in the film across the frame.

Typically for each structure testing of the impact of the heat shrinkage process on the non-drip coating, adhered to via a corona etched surface treatment on one side of the film, is also performed so by such testing of the heat point at which the coating is effected can be determined. It will be appreciated that an ETFE film will normally have coating for a number of effects such as to reduce dust and dirty adhesion or improve thermal performance. The heating effect for shrinkage and so tension control may affect these coatings in terms of simple performance degradation but also peeling/delamination. By testing of the temperature upon which the corona etched surface is affected it may be easy to re-apply the coating in situ.

As can be seen in figures 1 to 4 the method of aspects of the present invention is achieved by a machine 1 generally formed of a bridge 2 extending across a skeletal structural frame and secured in gutters 3 and with toe steps 4 so that installation operatives 8 can guide the machine 1. A roll of ETFE film 5 is secured in the bridge part 2 upon a spindle so that the film extends across the structural frame with an edge overlap. Formers in the form of rollers 6 guide and force a profile element into each channel with the overlap film to provide at least an initial retention of the film to the frame as a first fix. The machine 1 progressively moves along the skeletal frame with the roll of EFTE film 5 braked by the spindle in tension longitudinally in that direction and as outlined above at least initially laterally across the frame by the profile elements forced and secured into each channel.

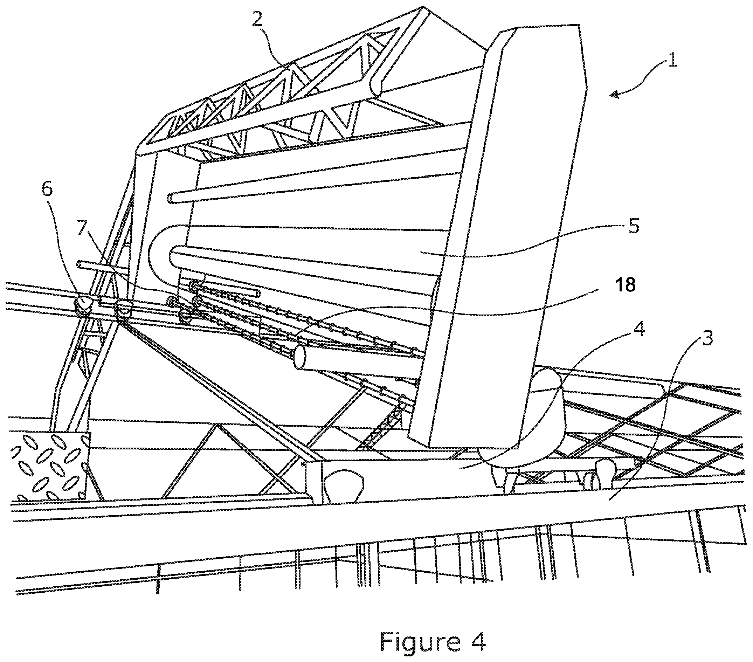

As particularly shown in figure 4 the roll of film 5 is positioned so that it is generally directly above the point of presentation of the film to the spaced channels in the skeletal frame. The film 5 has an accurate width so the overlap along the length of the presented film to the frame is consistent. With the film 5 appropriately presented as indicated above the method provided by the machine 1 is to use rollers 6 to force an appropriately shaped profile into the channel to tension and secure the film 1 relative to the frame. As the width is accurately consistent and the bridge 2 with the spindle presenting the film 5 also accurately configured it will be understood that the overlap is consistent so when the profile elements are applied into each channel then the tensioning of the film is known or settable at least approximately by a user. Guide rollers 7, 18 ensure the film 5 is flat as presented across the channels in the frame.

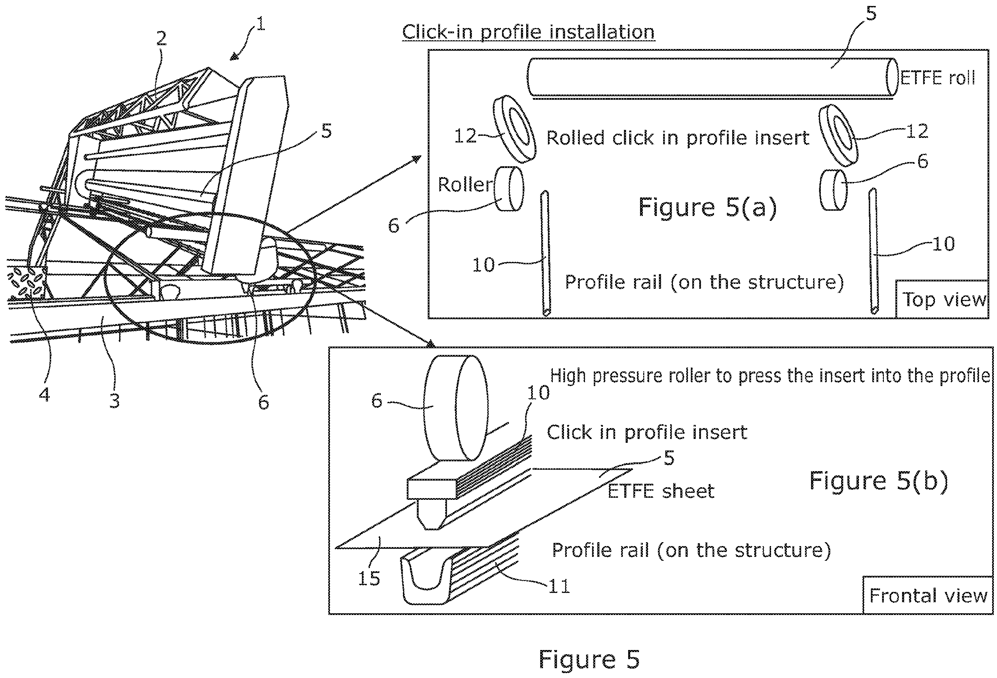

Figure 5 schematically illustrates a top view (figure 5a) and a frontal view (figure 5b) of the film roll with profile elements 10 forced into channels 11 with a roller. The profile elements 10 will click for location in the respective channel 11 and normally a masking tape 12 will be secured over it in use. The film sheet 5 has an overlap 15 forced into the profile channel 11 or rail formed in the skeletal frame structure. As indicated above the overlap 15 is predictable due to the accurate width of the film 5 and presentation by the method/machine of the present invention.so the effect of forcing the profile 10 into the profile channel 11 will also be consistent giving a predictable initial tensioning of the film 5 laterally across the frame.

Each profile 10 and profile channel 11 are designed to achieve the desired tensioning as well as grip. As indicated working with flexible and flaccid sheet materials has problems particularly in windy conditions but by only have a limited section of 'free' material between the roll 5 and where the profile 10 is clicked into location the possibility of flapping in the wind is reduced. However, most importantly achieving consistency is less dependent upon installation operative skill and experience in that the method/machine using consistent film 5 widths and so film edge overlap 15 to forced profile 10 location is inherent once the method/machine is set upon the frame.

As outlined above tension control is important with regard to achieving a desirable final structure using methods and machines in accordance with aspects of the present invention. Typically the machine to lay and present the film 5 is driven with the film 5 held so that by both pre and post tension control there is optimum film shrinkage for tension. The speed of movement of the machine will be regulated so that the braked film 5 roll on a spindle and the profile 10 locked film 5 edges (overlap 15) in the spaced channels 11 provide at least an initial tensioning or first fix of the film. However, this is mechanical and so may vary so in accordance with further aspects of the present invention a post tension, and preferably equalising tensioning process is provided.

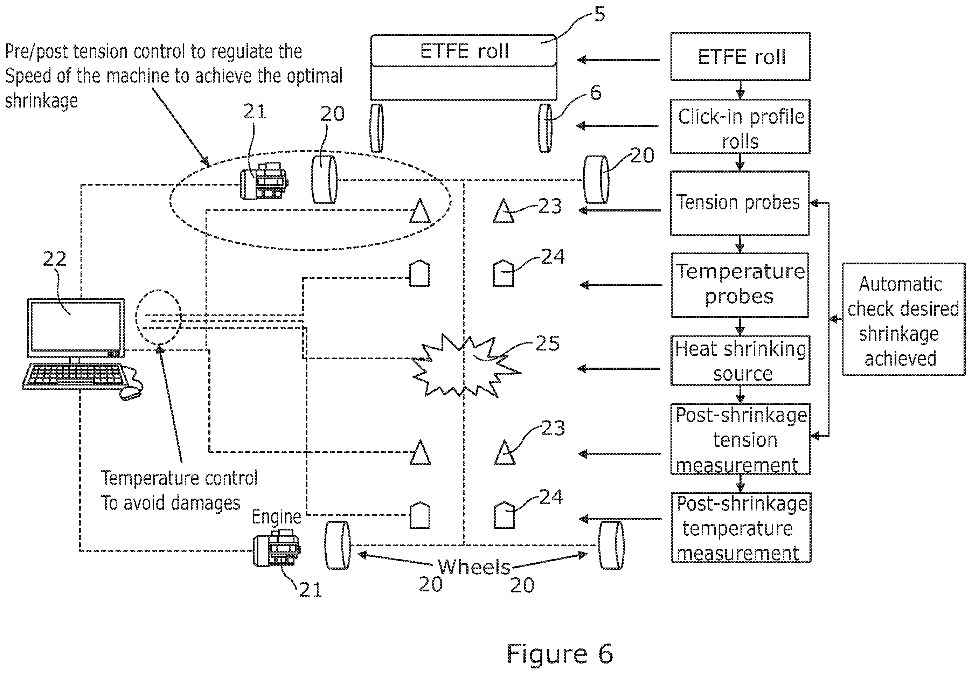

Figure 6 provides a schematic from above as to this process using heat shrinking of the film 5. As seen an EFTE film roll 5 is presented and associated with the channels preferably as described above with a bespoke profile engagement along edges of the film overlay into channels using formers such as rollers 6 or otherwise. The machine or method includes wheels 20 to drive the machine along the channels/gutters of the skeletal structure at an appropriate speed so longitudinal tension in the direction of travel. Motors 21 are used to drive the wheels 20 in a feedback control loop using a processor such as a PC 22 with inputs from tension monitors 23 and temperature monitors 24 before and/or after a heating 25 section of the machine or method phase. It is important especially to monitor temperature so the film 5 is not damaged in the process of providing installation heat shrinkage for tensioning.

The processor 22 as can be seen ideally will monitor a number of factors such as the film roll, the forcing profile rollers (applied force, resistance etc.), tension probes, temperature probes, a heat source (output as well as spread of heat across the film which may be uniform or tailored to the desired tensioning distribution and response), post heat shrinkage measurement and post film shrinkage measurement. The processor will utilise these data measurands to achieve a desired tension in the installed film in use.

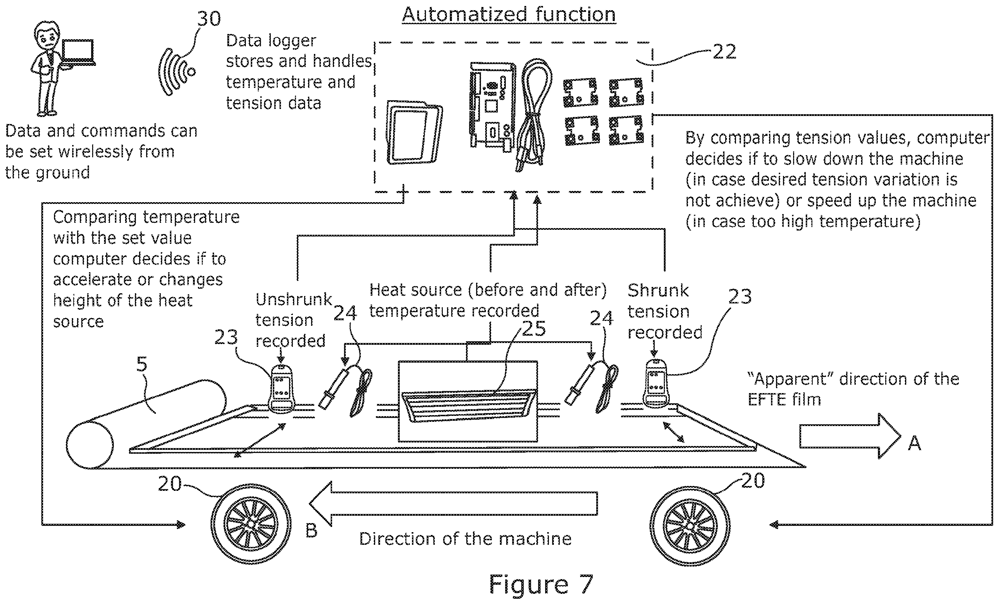

Figure 7 provides a further schematic from a side perspective of the methods and machine in accordance with aspects of the present invention. As previously the film roll 5 is laid or presented to the spaced channels 11 with an apparent direction A of film presentation as the film is fed out opposite to the direction B of the machine movement guided in the gutters. Tension is determined laterally by tension sensors 23 before and after a heating device 25 with monitoring of temperature of the film by temperature sensors 24 either side of the heating device 25. By comparing tension values the processor 22 normally in the form of a control computer can slow down or speed up the machine/method delivering the film 5 tensioning of the ETFE in accordance with the methods of aspects of the present invention. All the data and commands to the machine 1 can be made remotely and wirelessly 30 to a ground position so the machine 1 can operate at elevated positions with less safety concerns.

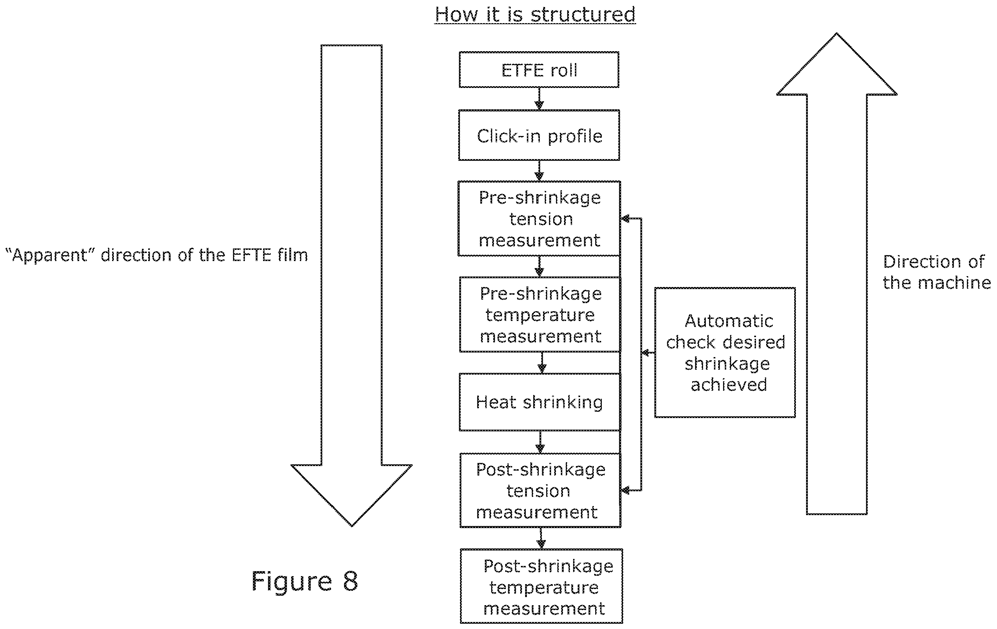

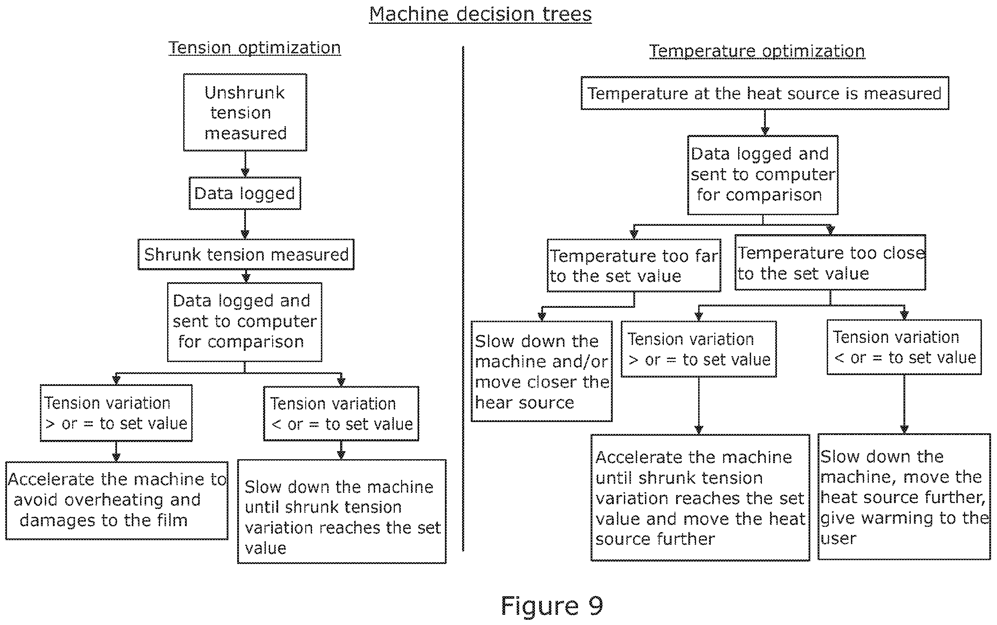

Figure 8 is a schematic of the method and operation of a machine in accordance with aspects of the present invention depicted in process steps whilst figure 9 depicts the methodology and decision processing performed by the machine through the sensors 23, 24 and actuators so that film 5 tension and temperature can be optimised and coordinated. As described previously elevated temperatures and/or prolonged application of heat may damage the film's material characteristics. In such circumstances as outlined above typically an ETFE film will be initially fixed preferably by a forced profile in a channel to give an initial tension then heat shrinkage applied judiciously so that the film will shrinkage for a desired level of tension plus due to the use of the preferred forced profile strip 10 in a channel 11 the film may equalise tension by some 'slip' or otherwise in the film in the respective profile 10 to channel 11 engagement.

Heating can be achieved in a number of ways:-
- IR heaters can be both halogen and/or ceramic and experimentally tested to assess the optimal choice according to the power needed to ultimately achieve the heat shrinkage useful temperature (combination of machine speed, temperature, distance to the film)
-
- Hot air blowers can also be tested and used in order to assess the optimal heat flow rate (combination of machine speed, hot air flow rate, distance to the film)
-
- Generally all components will be electrical with a low voltage source (24V) but for exceptionally high consumption items such as the thermal heater equipment where high power is required to achieve high temperatures then power can be provided by interfacing with solar panels
-
- Temperature sensors 24 are infrared and not usually laser for sake of connecting to a central data logging and controlling by the processor 22.
-
- Motors 21 are selected at 24V with high torque to match the weight of the machine and/or effects on the structure. Design includes one motor per wheel and computer synchronization via the central controller 22 will be required
-
- The central controller 22 requires software compiled to interface with widely available robust devices for example the temperature controllers and sensors 24.
-
- Tension meter 23 is an "on spot" tension meter hence generally more than one will be needed to take account of different tensions laterally across the width of the film.

In order to provide film covered structures formed from a film such a ETFE upon a skeletal frame it is necessary to secure the film to the frame. Sections of the frame in accordance with third aspects of the present invention have a channel to receive a fold typically near an edge of the sheet film. The fold is held by a profile shaped for insertion into the channel to retain the fold by creating a bend in the film about a retaining edge of the channel so that the film in tension with act against the resilience of the profile forcing it towards parts of the channel generally opposite and below the retaining edge so inhibiting release of the film fold from the channel.

The profile may be formed towards the same cross-sectional shape as the channel or adopt that shape in the channel by distortion. The profile will normally be made of a plastics or rubber material. The profile may be solid or hollow or have voids within it to achieve a desired resilience in use. A hollow centre or core or voids may be filled with air or other materials to alter the resilience of the profile in use. The profile and/or the channel may have features to facilitate film retention such as ribs, ridges, grooves, depressions and dimples. The features in the profile or channel may act with reciprocal features the opposite profile or channel. The features may run length wise or longitudinal and/or width wise or lateral and/or at an angle. The features may be continuous or intermittent along or across the channel or profile. The features may be undulating or wavy.

In terms of assembly the film fixing arrangement will be formed by locating an edge part of a film sheet over a channel in a frame. The profile will be forced into the channel taking a fold of film with it and that the resilience of the profile is deformed upon entry to the channel but that profiled then returns to a channel profile or shape once located to secure location of the film. The film will be tensioned by the process of positioning the profile in the channel and this tension will act to bend the film over an inner edge of the channel. However, the profile will not be dislodged from the channel as the action of the tension even when heat treated for tension equalisation will act about the inner engagement edge of the channel as a pivot edge. Thus, the profile will forcibly abut at or parts or sections of the channel below and opposite edge to the inner edge of the channel over which the film is bent.

The film is normally ETFE which has its own physical characteristics including stiffness which is utilised to provide a springboard such that the tension loading force in one side of the inner engagement edge of the channel over which the film is bent causes the profile to abut below the opposite edge to ensure retention in the channel and so fixing of the film in use.

It will be appreciated by those skilled in the art that any number of combinations of the aforementioned features and/or those shown in the appended drawings provide clear advantages over the prior art and are therefore within the scope of the invention described herein.

Embodiments of the invention may be found in the following numbered examples:
1 . A method of applying a film such as flexible ETFE to a skeletal structure, the method including presenting a film from a roll as a sheet across two spaced channels with a film edge overlap either side over a respective channel then forcing the overlap into a respective channel with the overlap sheet between opposed lip parts of the spaced channels, each film overlap forced simultaneously with a profile element located in to the channel by a former such that the film overlap is distorted in the channel for retention by the respective profile element for forced lateral tension in the film sheet between the spaced channels, the forced tension and simultaneous location of the profile element achieved by a substantially perpendicular downward rotatable in a direction of presentation of the film sheet to the spaced channels.
2. A method of applying a film such as flexible ETFE to a skeletal structure, the method including presenting the film with an initial tension between spaced channels and retaining with a respective channel, locally heating the film as and/or immediately after retention of the film by each channel whereby the film extends between the spaced channels with an initial lateral tension and the local heating causes a desired stretch of the film retain in the channels as the initial lateral tension and that initial lateral tension is increased as the local heating is removed and the film between the channels cools.
3. A machine for applying a film such as flexible ETFE to a skeletal structure, the machine comprising a bridge with a guide offset leg either side, the guide offset legs providing mountings for a film roll and means to present a continuous sheet from that roll substantially flat below the bridge, the guide offset legs arranged in use to associate with spaced channels whereby the continuous sheet has overlap portions and the machine has formers which press the sheet into the respective spaced channels with a profile element to retain at least lateral tension in the film between the spaced channels.
4. A machine for applying a film such as flexible ETFE to a skeletal structure, the machine comprising a bridge with a guide offset leg either side, the guide offset legs providing mountings for a film roll and means to present a continuous sheet from that roll substantially flat below the bridge, the guide offset legs arranged in use to associate with spaced channels whereby the continuous sheet can be fixed to the spaced channels with at least lateral tension in the film between the spaced channels, the machine having a heater between the guide offset legs and adjacent the means to present the continuous sheet whereby the film can be heated for heat shrinkage once fixed to the spaced channels.
5. A machine to provide the method as described in example 1 or example 2 separately or in combination.
6. A structure with a film associated with the structure as associated with a method as described in example 1 or example 2 or a machine as described in example 3 or example 4 or example 5.
7. A method or machine or structure as described in any of examples 1, 2, 3 or example 5 wherein the profile element and the channel are reciprocal male and female parts.
8. A method as described in example 2 or a machine as described in example 4 wherein the local heating is uniform across the continuous film sheet.
9. A method as described in example 2 or a machine as described in example 4 wherein the local heating is variable across the sheet.
10. A method as described in example 2 or a machine as described in example 4 wherein the local heating is provided by Infra Red or blown hot air. 1 1 . A method as described in example 1 or a machine as described in example 3 wherein the former is a roller.
12. A method as described in example 1 or a machine as described in example 3 wherein the former is substantially the width of the channel and configured in the direction of channel.
13. A method as described in example 1 or a machine as described in example 3 wherein the former is configured to transiently squash the profile element for interference retention when removed from engagement with the profile element in the channel.
14. A method or machine as described in any preceding example wherein the skeletal frame is for a greenhouse.
15. A method or machine as described in any preceding example wherein the spaced channels are for a roof panel.
16. A method or machine as described in any preceding example wherein the film has a fixed width of 2.1 metres.
17. A method or machine as described in any preceding example wherein the film on the roll has a residual shrinkage capacity in service of up to 1 .5%.
18. A method or machine as described in any preceding example wherein the initial lateral tension in the film across the spaced channels is 0.05%.
19. A method or machine as described in any preceding example wherein the spaced channels form part of or are adjacent the guttering of a structure in use and that guttering used to guide the film roll or continuous sheet along between the spaced channels.
20. A method or machine as described in any preceding example wherein ballast is provided to facilitate the downward pressure forcing the profile element into the channel with interference retention of the profile element in the channel.
21 . A method or machine substantially as hereinbefore described with reference to the accompanying drawings separately or collectively.

## Claims

1. A method of applying a film such as flexible ETFE to a skeletal structure, the method including presenting the film with an initial tension between spaced channels and retaining with a respective channel, locally heating the film as and/or immediately after retention of the film by each channel whereby the film extends between the spaced channels with an initial lateral tension and the local heating causes a desired stretch of the film retain in the channels as the initial lateral tension and that initial lateral tension is increased as the local heating is removed and the film between the channels cools.

2. A machine for applying a film such as flexible ETFE to a skeletal structure, the machine comprising a bridge with a guide offset leg either side, the guide offset legs providing mountings for a film roll and means to present a continuous sheet from that roll substantially flat below the bridge, the guide offset legs arranged in use to associate with spaced channels whereby the continuous sheet can be fixed to the spaced channels with at least lateral tension in the film between the spaced channels, the machine having a heater between the guide offset legs and adjacent the means to present the continuous sheet whereby the film can be heated for heat shrinkage once fixed to the spaced channels.

3. A method as claimed in claim 1 or a machine as claimed in claim 2 wherein the local heating is uniform across the continuous film sheet.

4. A method as claimed in claim 1 or a machine as claimed in claim 2 wherein the local heating is variable across the sheet.

5. A method as claimed in claim 1 or a machine as claimed in claim 2 wherein the local heating is provided by IR or blown hot air.

6. A method or machine as claimed in any preceding claim wherein the skeletal frame is for a greenhouse.

7. A method or machine as claimed in any preceding claim wherein the spaced channels are for a roof panel.

8. A method or machine as claimed in any preceding claim wherein the film has a fixed width of 2.1 metres.

9. A method or machine as claimed in any preceding claim wherein the film on the roll has a residual shrinkage capacity in service of up to 1.5%.

10. A method or machine as claimed in any preceding claim wherein the initial lateral tension in the film across the spaced channels is 0.05%.

11. A method or machine as claimed in any preceding claim wherein the spaced channels form part of or are adjacent the guttering of a structure in use and that guttering used to guide the film roll or continuous sheet along between the spaced channels.
